# EUROPEAN PATENT SPECIFICATION

(11) **EP 1 972 532 B1**
(45) Date of publication and mention of the grant of the patent: **20.10.2010**
(21) Application number: 08100206.5
(22) Date of filing: 08.01.2008
(51) Int. Cl.: B62J 6/04, B60Q 1/26, F21S 8/10

(54) **Tail lamp structure**
Heckleuchtenstruktur
Structure de feu arrière

(30) Priority: 23.03.2007 JP 2007077552
(43) Date of publication of application: 24.09.2008
(73) Proprietor: HONDA MOTOR CO., LTD., Tokyo 107-8556 (JP)
(72) Inventor: Ota, Hiroyasu c/o Honda R&D Co., Ltd, Saitama 351-0193 (JP); Ohashi, Hayato c/o Honda R&D Co., Ltd, Saitama 351-0193 (JP); Ashihara, Eiji c/o Forum Engineering Inc., Saitama (JP)
(74) Representative: Rupp, Christian

(56) References cited:
- EP-A- 1 464 888
- EP-A- 1 762 775
- JP-A- 2003 229 005
- US-A- 6 095 663
- US-A1- 2006 285 348

## Description

This invention relates to a tail lamp structure for use with a stop lamp or a tail lamp in a motorcycle.

As an example of a conventional tail lamp structure, a tail lamp structure wherein LEDs are disposed in a juxtaposed relationship in an upward and downward direction of a vehicle is known (refer to, for example, Patent Document 1).

Japanese Patent Laid-Open No. 2003-229005

However, in the conventional tail lamp structure described above, since the LEDs are disposed in a juxtaposed relationship in an upward and downward direction of the vehicle, an increased height dimension in the upward and downward direction is required.

Further, since, together with the arrangement of the LEDs, also boards for mounting the LEDs thereon must be juxtaposed in the upward and downward direction of the vehicle, the degree of freedom is disturbed in terms of the design.

U.S. Patent Publication No. 2006/285348 discloses a vehicle light assembly with an outer lens having at least two regions to be illuminated and employing semiconductor light sources arranged into at least two lighting circuits, a different lighting circuit illuminating each region and the light sources in one lighting circuit being mounted on an opposite side of a planar mount in the light assembly from the light sources in the other lighting circuit. A reflector is provided in the assembly housing, either as a separate body or as an integrally formed surface, and includes a first array of reflecting surfaces inclined to direct light from the light sources in the first lighting circuit through a first region of the outer lens and a second array of reflecting surfaces inclined to direct light from the light sources in the second lighting circuit through a second region of the outer lens. Light sources whose emitted light is absorbed by the outer lens to a larger degree than other light sources in the assembly can have an array of collimating lenses placed in the light path to improve their efficiency.

EP Patent No. 1464888 discloses the closest prior art tail lamp structure and comprises a device that has a first light unit with at least one light emitting diode source and an optically active surface for a first tail light function and a second light unit with a light emitting diode and an optically active surface providing a stop light function. The optically active surfaces of the first and second units being isolated from each other by a reflector and are arranged so that only one continuous boundary line between the light beams emitted by the first and second units exists in a projection onto a light output surface.

EP Patent No. 1886871 represents the state of the art in accordance with Article 54 (3) EPC and is directed to a signal light for vehicles, in particular rear light, with a housing, in which light emitting diodes arranged on a mother board, running in one carrying level are accommodated, and with one in light main radiation pattern opening of the housing arranged in front, taking of lens whereby on the mother board on the one hand at least a first shining unit with at least a first light emitting diode to the production of a first light function and on the other hand at least a second shining unit with at least a second light emitting diode to the production second light function is arranged, whereby a light returning mechanism is assigned to the second shining unit in such a manner that by the second shining unit emits the light over at least a pointed angle of return, before it returned by the lens into the environment.

It is an object of the present invention to eliminate the problems described above and provide a tail lamp structure whose height in an upward and downward direction can be reduced to achieve miniaturization thereof.

In order to attain the object described above, according to the invention as set forth in claim 1, a tail lamp structure equipped at a rear portion of a motorcycle comprises a board on which a stop lamp LED and a tail lamp LED are mounted in a spaced relationship from each other forwardly and backwardly, said board being disposed in the forward and backward direction of the vehicle, and the stop lamp LED and the tail lamp LED are isolated from each other by a reflector, wherein the stop lamp LED and tail lamp LED are mounted on an upper side of the board and a different stop lamp LED is disposed at a lower portion of said board.

According to the invention as set forth in claim 2, the tail lamp structure is wherein, in addition to the invention as set forth in claim 1, the stop lamp LED is disposed at an upper portion of the board, and a different stop lamp LED is disposed at a lower portion of the board.

According to the invention as set forth in claim 2, the tail lamp structure is wherein, in addition to the invention as set forth in claim 1, a different reflector is arranged forwardly of the reflector, and the plurality of reflectors are disposed in the forward and backward direction.

According to the invention as set forth in claim 3, a tail lamp structure equipped at a rear portion of a motorcycle is disposed on the upper side of the board.

With the tail lamp structure as set forth in claim 1, since the board on which the stop lamp LED and the tail lamp LED are mounted in a forwardly and backwardly spaced relationship from each other is arranged in the forward and backward direction of the vehicle, the height of the tail lamp structure in the upward and downward direction of the vehicle is reduced, and miniaturization can be anticipated.

With the tail lamp structure as set forth in claim 2, since the stop lamp LED is mounted at the upper portion of the board and the different stop lamp LED is mounted at the lower portion of the board, the stop lamp indication can be performed by a great emission light amount.

With the tail lamp structure as set forth in claim 3, since the different reflector is arranged forwardly of the reflector and the plurality of reflectors are arranged in the forward and backward directions of the vehicle, the stop lamp light emitting portion and the tail lamp light emitting portion can be indicated in a partitioned state from each other in the single tail lamp.

With the tail lamp structure as set forth in claim 4, since tail lamp indication is performed on the upper side of the board while license lamp irradiation can be performed on the lower side of the board, the necessity to provide the license lamp at a different place is eliminated, which makes the tail lamp structure smart in design.

FIG. 1 is a front elevational view of a tail lamp unit which uses a tail lamp structure of a first embodiment according to the present invention.
FIG. 2 is a sectional view taken along line I-I of FIG. 1.
FIG. 3 is a sectional view of a tail lamp unit which uses a tail lamp structure of a second embodiment of the present invention corresponding to the section taken along line I-I of FIG. 1.

In the following, a plurality of preferred embodiments of a tail lamp structure according to the present invention are described in detail with reference to the drawings.

### (First Embodiment)

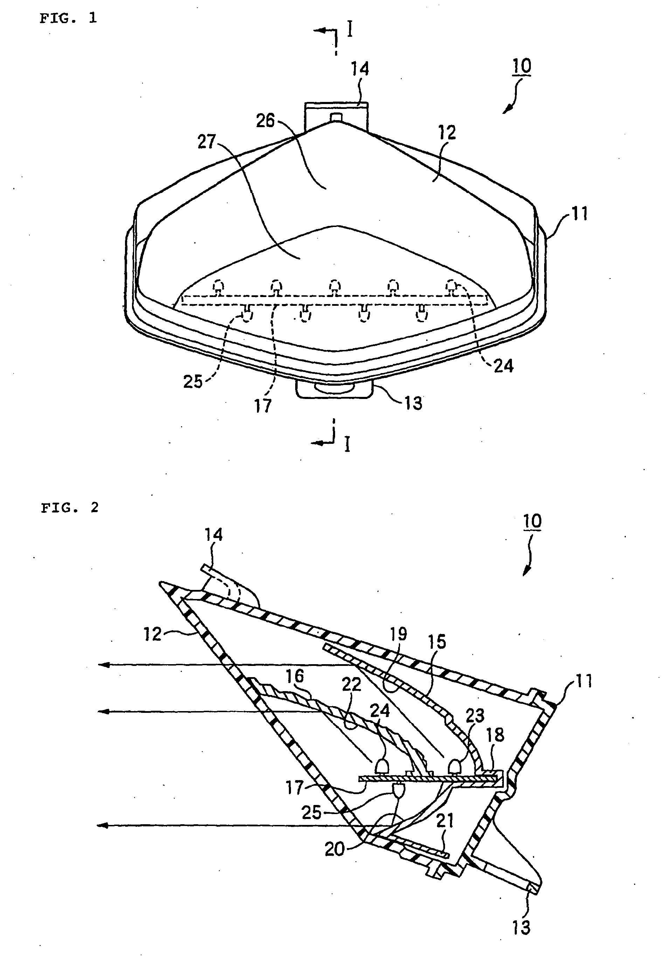

FIGS. 1 and 2 show a first embodiment of the present invention, and wherein FIG. 1 is a front elevational view of a tail lamp unit which uses the tail lamp structure according to the present invention and FIG. 2 is a sectional view taken along line I-I of FIG. 1. It is to be noted that the terms of front, back, right and left in the description represent directions as viewed from a driver who drives the motorcycle.

As shown in FIG. 1, the tail lamp unit 10 which uses the tail lamp structure of the present invention includes a tail lamp case 11 and a tail lamp lens 12.

The tail lamp case 11 is made of a resin material having a color conforming to the color of the vehicle, and a bracket 13 for the attachment to the vehicle is formed at a front portion of the tail lamp case 11 such that it projects obliquely forwardly.

The tail lamp lens 12 is made of a red resin material and formed in a triangular shape as viewed in a vertical section which tapers rearwardly. A securing portion 14 of a hook shape which is secured to a rear cowl not shown which is assembled so as to cover a seat frame not shown is formed in such a manner as to project obliquely rearwardly.

As shown in FIG. 2, the tail lamp unit 10 accommodates two reflectors including a first reflector 15 and a second reflector 16, and a board 17.

The first reflector 15 has formed at a central portion thereof a board retaining portion 18 of a channel shape which grips the board 17, and a tail lamp reflecting face 19 is formed at an upper portion on the rear side of the board retaining portion 18 such that it extends in a curved shape obliquely upwardly rearwards of the vehicle. Further, a first stop lamp reflecting face 20 is formed at a lower portion on the rear side of the board retaining portion 18 such that it extends in a curved shape obliquely downwardly rearwards of the vehicle. The first reflector 15 is secured at a case side securing portion 21 at a lower end portion thereof to a bottom portion of the tail lamp case 11.

The second reflector 16 is secured at a lower end portion thereof to the board 17 on the rear side of the vehicle with respect to the first reflector 15. A second stop lamp reflecting face 22 is formed at an upper portion on the rear side of the board 17 such that it extends in a curved shape obliquely upwardly rearwards of the vehicle.

The board 17 is attached to the board retaining portion 18 of the first reflector 15 such that it is disposed substantially horizontally in the forward and backward direction of the vehicle. On an upper face of the board 17, a red tail lamp LED (Light Emitting Diode) 23 is mounted at a rear portion of the tail lamp reflecting face 19 of the first reflector 15, and a red first stop lamp LED 24 is mounted at a rear portion of the second stop lamp reflecting face 22 of the second reflector 16. Meanwhile, on a lower face of the board 17, a red second stop lamp LED 25 is mounted at a rear portion of the first stop lamp reflecting face 20 of the first reflector 15.

Since the board 17 is electrically connected to a tail lamp control circuit and a stop lamp control circuit carried on the vehicle through a connector or the like not shown, the tail lamp LED 23 emits light with current supplied thereto from the tail lamp control circuit and the stop lamp LEDs 24 and 25 emit light with current supplied thereto from the stop lamp control circuit.

At this time, the emission light emitted from the tail lamp LED 23 is reflected by the second stop lamp reflecting face 22 of the second reflector 16 and then comes to an upper half of the tail lamp lens 12 to perform tail lamp indication at a tail lamp indication portion (refer to FIG. 1) 26 at an upper portion of the tail lamp lens 12.

Different from this, the emission light emitted from the first stop lamp LED 24 is reflected by the second stop lamp reflecting face 22 of the second reflector 16 and then comes to a lower half of the tail lamp lens 12. Meanwhile, the emission light emitted from the second stop lamp LED 25 is reflected by the first stop lamp reflecting face 20 of the first reflector 15 and then comes to the lower half of the tail lamp lens 12 to perform stop lamp indication by a stop lamp indication portion (refer to FIG. 1) 27 at a lower portion of the tail lamp lens 12.

In the tail lamp structure of the first embodiment described above, since the board 17 on which the first stop lamp LED 24 and the second stop lamp LED 25 as well as the tail lamp LED 23 are mounted in a forwardly and backwardly spaced relationship from each other is arranged in the forward and backward direction of the vehicle, the height of the tail lamp structure in the upward and downward direction of the vehicle is reduced, and miniaturization can be anticipated.

Further, in the tail lamp structure of the first embodiment described above, since the first stop lamp LED 24 is mounted at the upper portion of the board 17 and the second stop lamp LED 25 is mounted at the lower portion of the board 17, the stop lamp indication can be performed by a great emission light amount.

Further, in the tail lamp structure of the first embodiment described above, since the first reflector 15 is arranged forwardly of the second reflector 16 and the first reflector 15 and the second reflector 16 are arranged in the forward and backward directions of the vehicle, the stop lamp indication portion 27 and the tail lamp indication portion 26 can be indicated in a partitioned state from each other in the single tail lamp unit 10.

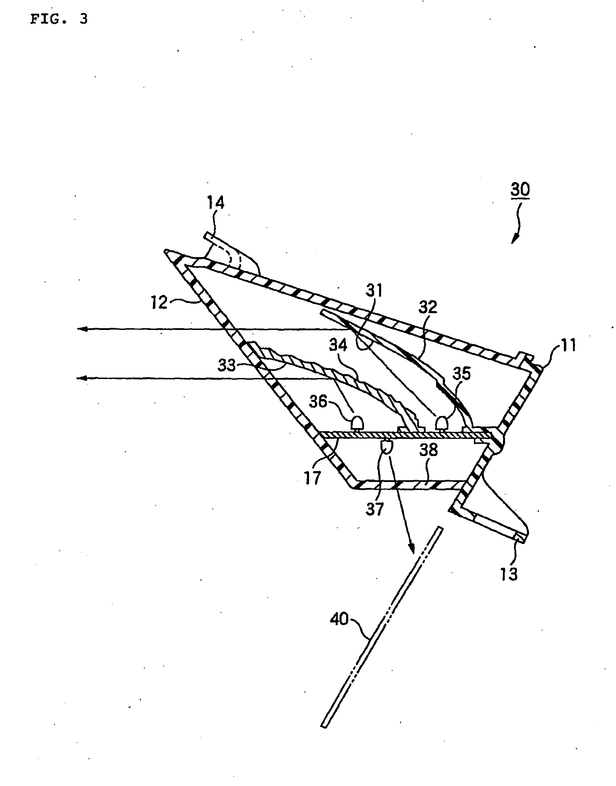

(Second Embodiment)
Now, a second embodiment of the tail lamp structure of the present embodiment is described with reference to FIG. 3. FIG. 3 is a sectional view of a tail lamp unit which uses the tail lamp structure of the second embodiment of the present invention corresponding to the section taken along line I-I of FIG. 1. It is to be noted that, in the following description of the second embodiment, description of components overlapping with those and components similar in function to those of the first embodiment described above is simplified or omitted by applying like or corresponding reference numerals to the components.

As shown in FIG. 3, in the tail lamp unit 30 of the second embodiment, a first reflector 32 having a tail lamp reflecting face 31 extending in a curved shape obliquely upwardly rearwards of the vehicle and a second reflector 34 arranged rearwardly of the first reflector 32 and having a stop lamp reflecting face 33 extending in a curved shape obliquely upwardly rearwards are arranged on an upper face of a board 17 which is assembled substantially horizontally in the forward and backward direction to the tail lamp unit 30.

On an upper face the board 17, a red tail lamp LED 35 is mounted at a rear portion of the tail lamp reflecting face 31 of the first reflector 32, and a red stop lamp LED 36 is mounted at a rear portion of the stop lamp reflecting face 33 of the second reflector 34. Meanwhile, a clear color license lamp LED 37 is mounted on a lower face of the board 17.

The tail lamp lens 12 has a transparent clear lens 38 arranged substantially horizontally at a lower end portion thereof, and a license plate 40 (imaginary line) is arranged below the tail lamp unit 30.

Emission light emitted from the tail lamp LED 35 is reflected by the tail lamp reflecting face 31 of the first reflector 32 and then comes to an upper half of the tail lamp lens 12 to perform tail lamp indication at a tail lamp indication portion 26 (refer to FIG. 1) at an upper portion of the tail lamp lens 12.

The emission light emitted from the stop lamp LED 36 is reflected by the stop lamp reflecting face 33 of the second reflector 34 and then comes to a central portion of the tail lamp lens 12 to perform stop lamp indication by a stop lamp indication portion 27 (refer to FIG. 1) at a lower portion of the tail lamp lens 12.

On the other hand, the emission light emitted from the license lamp LED 37 comes to the clear lens 38 at a lower end portion of the tail lamp lens 12 and irradiates upon the license plate 40.

While the tail lamp structure of the second embodiment exhibits action and effects similar to those of the first embodiment, particularly in the tail lamp structure of the second embodiment, since tail lamp indication and stop lamp indication are performed on the upper side of the board 17 while license lamp irradiation can be performed on the lower side of the board 17, the necessity to provide the license lamp at a different place is eliminated, which makes the tail lamp structure smart in design.
- 10: tail lamp unit
- 15: first reflector (reflector)
- 16: second reflector (reflector)
- 17: board
- 23: tail lamp LED
- 24: first stop lamp LED (stop lamp LED)
- 25: second stop lamp LED (stop lamp LED)
- 32: first reflector (reflector)
- 34: second reflector
- 35: tail lamp LED
- 37: license lamp LED

## Claims

1. A tail lamp structure equipped at a rear portion of a motorcycle, comprising:
a board (17) on which a stop lamp LED (24) and a tail lamp LED (23) are mounted in a spaced relationship from each other forwardly and backwardly,
said board (17) being disposed in the forward and backward direction of the vehicle, and
said stop lamp LED (24) and said tail lamp LED (23) are isolated from each other by a reflector (16), and
wherein said stop lamp LED (24) and a tail lamp LED (23) are mounted on upper side of a board (17), and
wherein said stop lamp LED (24) is disposed at an upper portion of said board (17),
and a different stop lamp LED (25) is disposed at a lower portion of said board (17).

2. The tail lamp structure according to claim 1, wherein a different reflector (15) is arranged forwardly of said reflector (16), and the plurality of reflectors are disposed in the forward and backward direction.

3. The tail lamp structure of claim 1, wherein a tail lamp LED (35) is disposed on the upper side of said board (17), and a license lamp LED (37) is disposed on the lower side of said board (17).

## Patentansprüche

1. Heckleuchtenkonstruktion, mit der ein hinterer Abschnitt eines Motorrads ausgestattet ist, die aufweist:
eine Platine (17), auf der eine Bremsleuchten-LED (24) und eine Heckleuchten-LED (23) in einer nach vorne und hinten beabstandeten Beziehung voneinander montiert sind,
wobei die Platine (17) in der Vorwärts- und Rückwärtsrichtung des Fahrzeugs angeordnet ist, und
die Bremsleuchten-LED (24) und die Heckleuchten-LED (23) durch einen Reflektor (16) gegeneinander isoliert sind, und
wobei die Bremsleuchten-LED (24) und eine Heckleuchten-LED (23) auf einer Oberseite einer Platine (17) montiert sind, und
wobei die Bremsleuchten-LED (24) in einem oberen Abschnitt der Platine (17) angeordnet ist, und eine andere Bremsleuchten-LED (25) in einem unteren Abschnitt der Platine (17) angeordnet ist.

2. Heckleuchtenkonstruktion gemäß Anspruch 1, wobei ein anderer Reflektor (15) vor dem Reflektor (16) angeordnet ist, und die mehreren Reflektoren in der Vorwärts- und Rückwärtsrichtung angeordnet sind.

3. Heckleuchtenkonstruktion gemäß Anspruch 1, wobei eine Heckleuchten-LED (35) auf der Oberseite der Platine (17) angeordnet ist, und eine Kennzeichenleuchten-LED (37) auf der Unterseite der Platine (17) angeordnet ist.

## Revendications

1. Structure de feu rouge arrière prévue au niveau d'une partie arrière d'une motocyclette, comprenant :
une carte (17) sur laquelle une diode électroluminescente de feu de frein (24) et une diode électroluminescente de feu rouge arrière (23) sont montées en relation espacée l'une par rapport à l'autre vers l'avant et vers l'arrière,
ladite carte (17) étant disposée dans la direction avant et arrière du véhicule, et
ladite diode électroluminescente du feu de frein (24) et ladite diode électroluminescente du feu rouge arrière (23) sont isolées l'une par rapport à l'autre grâce à un réflecteur (16), et
dans laquelle ladite diode électroluminescente de feu de frein (24) et ladite diode électroluminescente de feu rouge arrière (23) sont montées sur un côté supérieur d'une carte (17), et
dans laquelle ladite diode électroluminescente de feu de frein (24) est disposée au niveau d'une partie supérieure de ladite carte (17), et une diode électroluminescente de feu de frein (25) différente est disposée au niveau d'une partie inférieure de ladite carte (17).

2. Structure de feu rouge arrière selon la revendication 1, dans laquelle un réflecteur (15) différent est agencé vers l'avant dudit réflecteur (16), et la pluralité de réflecteurs est disposée dans les directions avant et arrière.

3. Structure de feu rouge arrière selon la revendication 1, dans laquelle une diode électroluminescente de feu rouge arrière (35) est disposée sur le côté supérieur de ladite carte (17), et une diode électroluminescente de feu de plaque d'immatriculation (37) est disposée sur le côté inférieur de ladite carte (17).
